# EUROPEAN PATENT APPLICATION

(11) **EP 1 043 070 A1**
(43) Date of publication of application: **11.10.2000**
(21) Application number: 99106104.5
(22) Date of filing: 01.04.1999
(51) Int. Cl.: B02C 4/36, B02C 4/40, A23G 1/12

(54) **Milling device**

(71) Applicant: Kraft Jacobs Suchard R & D, Inc., 81737 München (DE)
(72) Inventor: Löser, Ulrich, 83607 Holzkirchen (DE); Struck, Andreas, 80687 München (DE); Stuart Kirtley, Nigel, 1640 Rhode-St. Genese (BE)
(74) Representative: HOFFMANN - EITLE

(57) **Abstract**

The present invention relates to a milling device comprising a roll mill (19) having a plurality of rolls (1, 2, 3, 4, 5) for milling a mass (22), imaging means (25, 32) for imaging a surface on at least one of said rolls (1, 2, 3, 4, 5) and for generating a corresponding surface image (26), and image processing means (27) for processing said surface image (26). The employment of an imaging means in connection with a roll mill provides a very flexible and efficient milling system, as the generated image can be processed to fulfill a number of tasks, for example for generating a control signal used to set the operational parameters of the roll mill, for generating a warning signal relating to the deterioration of parts of the roll mill, or for generating an analysis of the state of one of the rolls of the roll mill.

In the first case, this advantageously enables a fully automated and highly efficient adjustment of operational parameters of the roll mill without intervention of an operator, in the second case this enables an early recognition of wear on given parts, and in the third case this enables the checking of the roll condition without having to dismount the roll from the roll mill.

The present invention advantageously allows the performing of a throughput measurement and allows precise particle size control in the milled material.

## Description

### [Field of invention]

The present invention relates to a milling device using a roll mill having a plurality of rolls.

### [Background of invention]

Roll mills are devices in which a substance or material is milled by being passed between rotating rolls.

For milling a pasty or dough-like mass, such as a suspension of premixed ingredients, it is known to use roll mills having cambered rolls that have a smooth surface. Through the milling, the size of particles in the pasty or dough-like mass is reduced. As shall be explained in the following, the milling in such a roll mill is done by letting the material pass through gaps between pairs of rotating rolls, such that there is a correlation between the gap width and the particle size. Such roll mills may be used in connection with the processing of any type of pasty or dough-like mass. In a general way, roll mills with smooth surface rolls are suitable for any type of material that has the capability of clinging to the rolls in such a way that it may be transported by the rolls and passed from one roll to the next during transport. In the following, the description will be given in terms of chocolate manufacturing as an example.

The manufacturing of chocolate uses at least one refining process for achieving a fine particle size. In common use are 5-roll-refiners. The efficiency of refining is determined by how even a film of material (the chocolate pre-mass)- with a minimum of throughput losses - is present along the machine rolls.

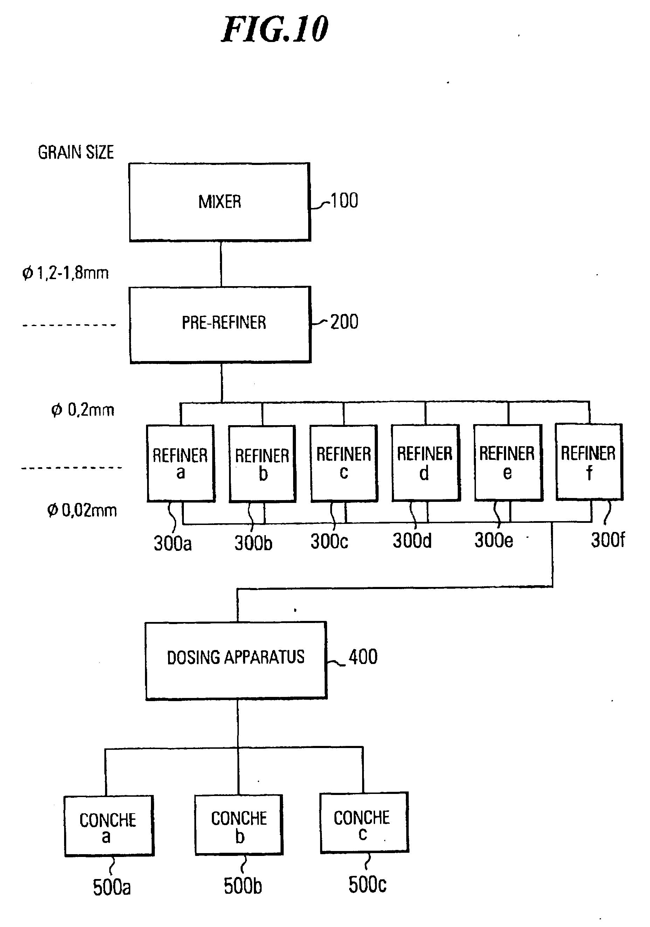

A conventional chocolate manufacturing process will now be explained in more detail with reference to Fig. 10.

Fig. 10 is a block diagram of the chocolate manufacturing process. At a first stage, the chocolate raw material, that is the ingredients are mixed in a mixer or mélangeur 100. These ingredients and their relative amounts will depend on the type of chocolate being manufactured, e.g. in the case of milk chocolate mainly consist of sugar, cocoa liquor, milk powder and fat components. The ingredients are supplied to the mixer in a batch process, usually with a batch size of around 1.5 tons. The mixing cycle takes around 15 minutes.

Then, the mixed ingredients are transported by means of a conveyor belt or any other suitable transporting means to a pre-refiner 200. Before entering this pre-refiner 200, the grain size or particle size of these ingredients ranges from 1.2 to 1.8 millimeters in diameter (the particle size of the raw material). This pre-refiner 200 can be any kind of roll mill and is usually a 2-roll-refiner. The pre-refiner 200 reduces the grain size of the ingredients to a size of around 0.2 millimeters in diameter, i.e. the grain size is reduced by a factor of 5.

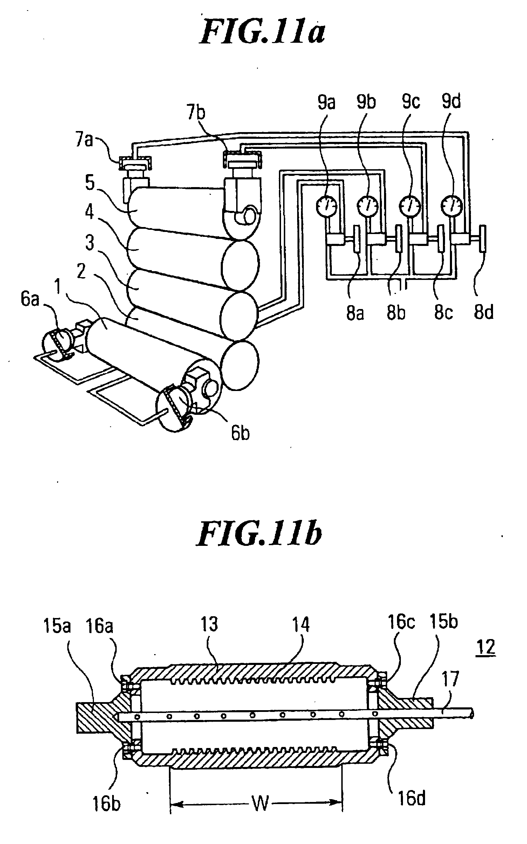

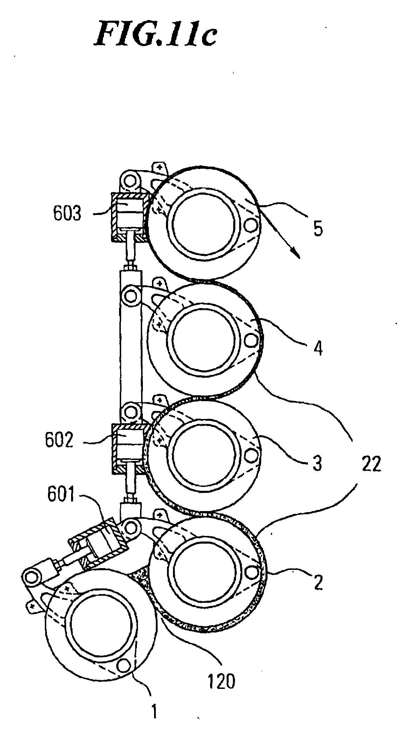

Then, the pre-refined ingredients can be supplied to another mixer or mélangeur (not shown) or can be transported directly to a plurality of refiners 300a to 300f. Usually, there are six refiners 300a to 300f in combination with one pre-refiner 200. However, it is also possible to use any other suitable number of refiners 300a to 300f. These refiners 300a to 300f are usually of the type described in the following with reference to Fig. 11a and reduce the grain size down to a size of around 0.02 millimeters. For the transport between the pre-refiner 200 and the refiners 300a to 300f there is provided a suitable conveyor belt or any other suitable transporting means. After the refining stage at the refiners 300a to 300f, where the grain size is reduced by a factor of 10, the refined ingredients, so-called flakes, are supplied to a dosing apparatus 400 or directly into the conche.

The dosing apparatus 400 portions the continuous ingredients film supplied from the refiners 300a to 300f by a suitable transporting means, such as a conveyor belt, into suitable portions which are then supplied to a given number of conches 500a to 500c. For the transport between the dosing apparatus 400 and the conches 500a to 500c there is again a suitable transporting means.

At the conches 500a to 500c the film of material provided from the refiners 300a to 300f, which is a pasty film consisting of a plurality of individual particles with a size of around 20 micrometers, is treated such that a suspension, i.e. the chocolate is formed. The conching cycle usually lasts around 7 hours or more.

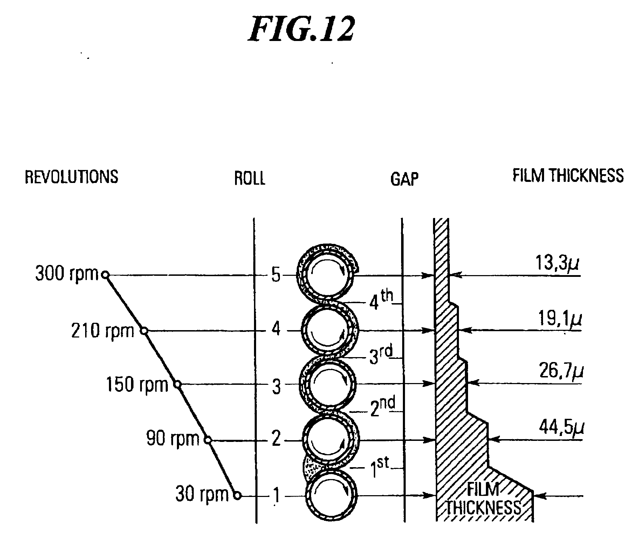

In the following, a conventional roll mill used as a pre-refiner or in particular as a refiner is described with reference to Figs. 11a, 11b, 11c and 12. Such a roll mill is disclosed e.g. in Finke, A.: "Handbuch der Kakao-Erzeugnisse", Springer-Verlag, Berlin, 1965, or in the technical manual of the Bühler company, "Schokoladen-Fünfwalzwerke", Uzwil, 1991.

Fig. 11a shows a conventional roll mill, which can be used as a refiner in the manufacturing of chocolate. Reference numerals 1 to 5 denote first to fifth rolls, which are successively arranged with a predetermined distance between each pair thereof. The numbering is used in such a way that the material to be milled is provided to the first roll, successively passed to the following rolls, and extracted or removed after the fifth roll. Reference characters 6a and 6d denote first actuating means. These first actuating means 6a, 6b are static-hydraulically, dynamic-hydraulically or pneumatically actuated and allow to change the position of the roll 1 and therewith a gap width between rolls 1 and 2 and/or controls a pressure with which roll 1 is pressed against roll 2. By individually actuating each of said first actuating means 6a and 6b, it is e.g. possible to adjust a gap width such that the gap width between rolls 1 and 2 on the left side of said rolls is smaller than a gap width between said rolls 1 and 2 at the right side.

Reference characters 7a and 7b denote second actuating means, which are arranged for setting a gap width between rolls 5 and 4 and/or a pressure with which roll 5 is pressed against roll 4. Similar to the first actuating means 6a and 6b, the second actuating means 7a and 7b can be actuated individually and are static-hydraulically, dynamic-hydraulically or pneumatically actuated. Each of said first and second actuating means 6a, 6b, 7a and 7b is connected to suitable manipulation or setting means 8a to 8d for controlling the setting of the actuating means, such as the adjustable pressure valves shown in Fig. 11a, which are connected via respectively provided hydraulic pipes.

Reference characters 9a to 9d denote suitable display means, such as e.g. pressure gauges, which are respectively provided for each of said manipulation means 8a to 8d and serve to indicate a state and/or a position of the respective one of the first and second actuating means 6a, 6b, 7a, 7b. The display means 9a to 9d in Fig. 11a are adapted to indicate a pressure of a hydraulic fluid in the pipes to the actuating means 6a, 6b, 7a, and 7b. The setting means 8a to 8d are connected to an appropriate hydraulic or pneumatic pressure supply (not shown).

Fig. 11c shows a side sectional view of another five-roll refiner. As can be seen, this roll mill has three actuating means, i.e. pressure cylinders 601, 602, 603 for respectively pressing rolls 1 and 2, rolls 2 and 3, and rolls 4 and 5 against each other. It may be noted that a roll mill can have any suitable number of actuating means. The film being processed is referred to as 22. Regarding the gap 120 between rolls 1 and 2, which is the feeder gap for material, it may be said that two basic types of arrangements are known, namely static gaps and dynamic gaps. A static gap is characterized in that the gap width is set to a desired specific value and regulation is performed such that this desired gap width is maintained. In other words, in response to varying forces at the gap (e.g. due to changes in the material being supplied), the pressure is varied to keep the gap width substantially constant. A dynamic gap on the other hand is capable of "floating", i.e. the gap width may change in response to varying forces at the gap. In this case, as a variation of gap width also leads to varying amounts of material being transported, the actual gap width is usually measured and the speed of the second roll 2 is typically adjusted such that the throughput remains constant.

Fig. 11b shows a sectional view of a roll 12 which can be used as one of the rolls 1 - 5 in the roll mill shown in Fig. 11a or 11c. Roll 12 comprises a hollow drum 13 which is formed such that its diameter in the middle of the drum is slightly larger than that at the sides of the drum. This is called "camber". The drum 13 shown in Fig. 11b further comprises cooling ribs or fins 14 for improving the cooling of the drum 13, which is performed with cooling water that is supplied to and drained away from the inside of the drum capped nuts 15a (motor side) and 15b (water side), which are integrally cast with said drum 13 or fastened thereto as shown in Fig. 11b with screws 16a to 16d. However, the inside of the roll may also be smooth. Reference number 17 denotes an axis, having holes through which the cooling water can be supplied to and drained off the inner portion of said drum 13. Generally temperature control is effected by adjusting the quantity of the water flowing into the roll (said water having a given temperature) and monitoring the temperature of the water flowing out. As can be seen in Fig. 11b, said roll 12 has a machining width w, which is usually around 1800 mm and the whole length of the roll 12 is usually around 2000 mm. The diameter of roll 12 is usually around 40 centimeters. The roll 12 can be used as any one of the rolls 1 to 5 shown in Fig. 11a.

In the following, the operation of the roll mills described with reference to Figs. 11a to 11c will be described with reference to Fig. 12.

The left portion of the Figure shows a diagram indicating the revolutions per minute with which each of said rolls 1 to 5 shown in the middle portion of Fig. 12 rotates. There are respective first to fourth gaps between the five rolls, as indicated in the Figure. The right portion of Figure 11 shows the film thickness of the machined doughy and paste-like film after each of said first to fourth gaps which is decreased gradually from around 100 µm to 44.5 µm between rolls 1 and 2, to 26.7 µm between rolls 2 and 3, to 19.1 µm between rolls 3 and 4, and to 13.3 µm after the fourth gap between rolls 4 and 5 (in case the roll mill is used as refiner in the manufacturing of chocolate in accordance with the process shown in Fig. 10). Naturally, these values are only examples. As indicated with the arrows in the rolls 1 to 5, successive rolls have opposite rotation directions and the material being milled is transported upwards by means of the different speeds and directions of rotation.

The ingredients or particles to be refined are supplied to roll 1, which rotates with around 30 rpm in clockwise direction. The particle size and grain size of the supplied material is typically around 0.1 to 0.2 millimeters in case the roll mill described with Figs. 10a and 10b is used as a refiner in the manufacturing of chocolate. The following roll 2 which rotates with around 90 rpm in counter-clockwise direction takes the film from the roll 1 and transports it to the second gap. At this point, the particle size is reduced down to around 50 micrometers. Roll 3 rotating in clockwise direction with around 150 rpm takes the film from roll 2 and supplies it to the third gap. This process is repeated in the same manner at the following rolls, such that the film thickness and therewith the particle size of the ingredients is gradually decreased down to around 20 µm. It may be noted that the gap directly sets the film thickness, but that the average particle size in the film is a separate parameter. Naturally, there is a correlation between these two parameters. Finally, the film is taken from roll 5 by means of a suitable removal means (not shown), such as a removal knife and is supplied to a transporting means (not shown) to be transported to the following process stage.

Generally, in chocolate manufacturing it used to be necessary that an operator supervised a line containing several roll mills, and such an operator was only able to do this for one machine at a time. The operator visually observed the degree of coverage on each roll, compared his observation with the machine settings from a control panel and adjusted these settings according to his experience.

Due to the fact that the operator of the refiner or of the pre-refiner set the operational parameters of the refiner, such as the temperature of the rolls (more specifically: the temperature of the cooling water at the outlet is the actual control parameter used for adjusting the flow rate of cooling water into the roll), the gap width of the rolls, the pressure with which rolls are pressed against each other, or the force in the first gap (the feeding gap) by experience, it was difficult to reproduce the process. Especially, the individual parameters are generally not independent of one another, because e.g. a change in temperature also leads to a change in pressure, because the material of the rolls expands or contracts with changing temperature. In other words, the gap width may also be adjusted via the temperature. Therefore, since there are a plurality of interdependent parameters to be set in such a refiner, this experience had to be gained during a long training period. This made it difficult to replace the operator in case he was ill or absent. Also, due to the fact that the operator was usually not only responsible for one refiner but often for more than 5, he could not monitor the machine state and the film continuously but at certain intervals only, and he could not immediately respond to errors or changes in the machine or in the film. Finally, due to the fact that a change of said parameters listed above shows a first result after around 10 minutes, a lengthy trial and error process was necessary to find suitable operational parameters.

In order to overcome these problems, modern refiners are typically closed, such that no observation of the film is possible, and the control of the machine is performed by using a dynamic gap and a predetermined start-up procedure. The start-up procedure changes the adjustable parameters from certain start values to certain running values in accordance with a program adapted to the material being processed. Once the running values are reached, it is assumed that the machine performance and output quality will stay constant.

It is known to supplement such closed refiners with sensors for automatically monitoring certain processing parameters. WO 94/10530 e.g. discloses a method of automatically measuring the thickness of dough-like material on a moving surface wherein a movable mounted measurement roller is laid on the layer and, while the surface covered by the layer moves past, the distance the roller is displaced at right angles to the direction of motion of the surface is determined by means of a sensor.

Although such modern roll mills work automatically, they are restricted in their capacity of reacting to unforeseen changes, e.g. in the composition of the mass being processed.

As an example, when producing chocolate, even relative small changes in the fat content at the mixer have a relatively large effect on the mass consistency at the refiner. The known refiners only have the dynamic feeding gap as a means for reacting to changes.

Additionally, conventional roll mills suffer from the problem that a monitoring of the condition of machine parts that are susceptible to wear requires the machine to be stopped and the corresponding part to be removed for inspection. This interruption of the production process is costly. On the other hand, if a part is used too long, then the reduction in output quality and the possible break down of the entire machine can be even more costly. It is difficult to find the correct balance between these two conflicting interests.

### [Object of invention]

In view of the problems described above, it is the object of the present invention to provide an improved milling device.

### [Summary of invention]

This object is solved by providing a milling device, comprising a roll mill having a plurality of rolls for milling a mass, imaging means for imaging a surface on at least one of said rolls and for generating a corresponding surface image, and image processing means for processing said surface image.

In accordance with the present invention an imaging means is added to a roll mill. A surface on a roll is imaged, which means that either the film on the roll is imaged, or if a certain part of the roll is not covered, the surface of the roll itself. It is also possible to additionally image a background together with the surface. The image produced by said imaging means can be employed for a number of purposes.

According to one preferred embodiment, the image is used as a basis for generating a control signal that is fed back to the roll mill in a control loop for adjusting the operational parameters of the roll mill. According to another preferred embodiment, which may advantageously be combined with the above embodiment, the image is processed for generating a signal indicating the condition of one or more parts of the roll mill that are susceptible to wear, such as the rolls themselves or the removing knife at the last roll. In this connection it may be mentioned that the present invention is highly flexible, as the imaging can be performed while the machine is processing material, while it is running without material (in which case no pressure is exerted between rolls), or while it is not running. Thereby it is possible to gain relevant information in any running state of the machine. For example, in the full operation state with material being processed, feed back information for adjusting the roll mill and monitoring information on the condition of machine parts can be derived, while in the running state without material and the off state information on machine parts can be derived. In the latter case the importance lies in the fact that the parts do not need to be removed for inspection.

Due to the fact that the information gathering is conducted on the basis of an imaging process, i.e. in contact-less fashion, the monitoring itself does not cause any wear or tear.

It should be noted that the term "imaging" is supposed to indicate the general formation of an image on the basis of any suitable type of radiation reflected by and/or originating from the object being imaged. The term "image" specifies any suitable technical representation of the received radiation. Preferably, the radiation is electromagnetic radiation in the visible and/or IR range, and the representation or image is the corresponding response of an electronic camera, but the present invention is by no means restricted to these preferred examples.

According to a preferred embodiment of the present invention, the control signal for controlling the adjustment of operational parameters of said roll mill is derived on the basis of a pattern recognition process performed on the captured image.

It has been found that particular patterns in the surface of said film, such as e.g. holes in the film with a certain distance from each other or a reduced width of said film, indicate particular corresponding errors or a wrong setting of operational parameters in the machine. The aforesaid pattern with holes having a certain distance from each other indicates e.g. an irregular wear of one of said rolls, and a reduced width of the film indicates that two rolls are overpressed (are pressed against each other with a pressure which is to high) or the temperature of said rolls is too high.

It has been recognized by the inventors that ensuring an even coverage of rolls during processing greatly enhances the quality of the product. Although it was known that the gap width and the average particle size in the product are correlated, the inventors recognized that an uneven coverage of material on the rolls (especially the last roll) leads to an increased average particle size and to wider distributions, i.e. distributions having a larger mean deviation. The object of milling however is to obtain a predetermined average particle size with little deviation from the mean value, to thereby obtain a defined quality. Consequently, a preferred embodiment of the present invention employs the imaging means and control feed-back in such a way that the coverage on the rolls is even.

The invention allows advantageously monitoring the quality of the machined material and simultaneously the condition of the machine itself. It is possible to simultaneously implement an automatic control process and to detect defects early along and thereby be able to exchange or repair parts of said refiner before major problems occur, which reduces the machine down-time.

Further improvements and embodiments of the present invention will become apparent from the dependent claims.

### [Brief description of Figures]

The invention may be more fully understood in conjunction with the accompanying drawings. In the accompanying drawings,
- Fig. 1: shows an embodiment of milling device according to the present invention;
- Fig. 2: shows a flow chart illustrative for a control operation of the arrangement shown in Fig. 1;
- Fig. 3: shows another embodiment of the milling device according to the present invention;
- Fig. 4: schematically shows examples of successive line images taken with a line scan camera as arranged in the device of Fig. 3;
- Figs. 5a to 5e: show actual examples of patterns of a powder film on the final roll of a refiner used in chocolate manufacturing, such as the one described with reference to Fig. 11a;
- Fig. 6: is a schematic diagram for describing the operation of the pattern recognition portion shown in Fig. 3 comprising a neural network;
- Fig. 7a: is a schematic diagram for describing the operation of a neuron comprised in a neural network;
- Fig. 7b: is a schematic diagram showing an architecture of a neural network according to another example;
- Fig. 8: shows another embodiment of the milling device according to the present invention;
- Figs. 9a: illustrates a specific way of imaging a part of a roll, such that information on the thickness of the film being transported over said roll may be derived;
- Figs. 9b: shows a schematic representation of an image taken by the arrangement shown in Fig. 9a
- Fig. 10: is a block diagram illustrating the manufacturing process of chocolate;
- Fig. 11a: shows an example of a conventional roll mill with five rolls;
- Fig. 11b: shows a roll used in the refiner-type roll mill of Fig. 11a;
- Fig. 11c: shows a side sectional view of another five-roll refiner; and
- Fig. 12: indicates the operation and operational parameters of the roll mills shown in Fig. 11a and 11c.

### [Detailed description]

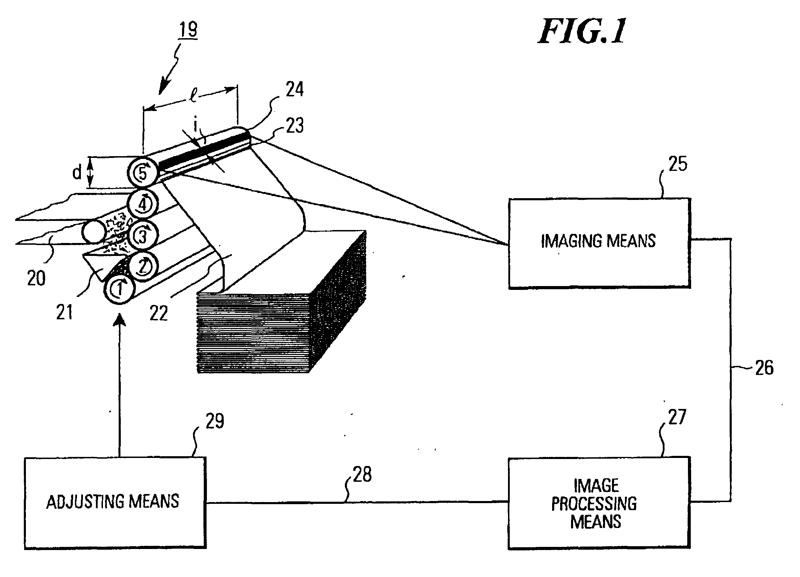

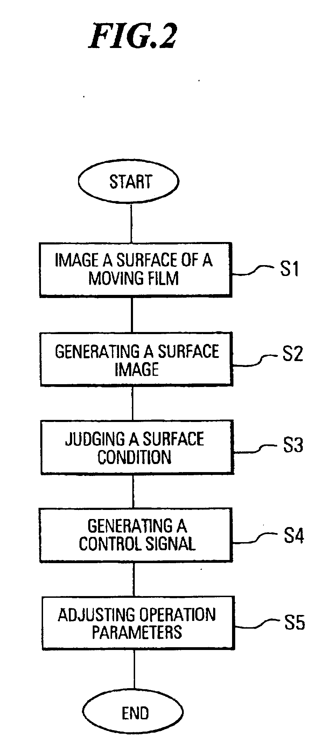

In the following, a first embodiment of the milling device according to the present invention will be described with reference to Figs. 1 and 2.

In Fig. 1, a conveyor belt 20 is shown for transporting or conveying material to be processed to a roll mill 19. In the following description it is assumed that the roll mill 19 is basically of the type as described with reference to Fig. 11a and is used as a refiner for the production of chocolate in a process as the one described with reference to Fig. 10. The description relating to Figs. 10, 11a, 11b and Fig. 12 in the introductory part of the present application is herewith included in the description of the present invention. However, it has to be noted that the present invention is not limited to use in combination with a refiner or to the manufacturing of chocolate. The production of chocolate is, however, a preferred application of the present invention.

Reference number 21 denotes a material receiver, which is arranged for receiving the material to be processed, which is supplied from the conveyor belt 20, and to supply it to the first roll 1. The refiner 19 shown in Fig. 1 is a 5-roll refiner comprising rolls 1 -5. The constitution of the rolls is similar to that described with reference to Fig. 11b.

Reference number 22 denotes the pasty film being milled. This film is a paste-like doughy film containing a plurality of individual particles to be milled. It may be noted that although Fig. 1 schematically shows the material removed from the last roll 5 as being in the form of a sheet, when manufacturing chocolate, the flakes coming out of the mill will generally have a powder like consistency. In the assumed case of the production e.g. of milk chocolate, the processed mass will be a premixed suspension comprising cocoa liquor, fat components, milk powder and sugar particles. The powder film 22 is taken from the last roll 5 by means of a removal means 23 such as a removal knife.

As shown in Fig. 1, the processed film 22 may be stacked or - as described with reference to Fig. 10 - can be directly transported to the successive manufacturing stage by means of a conveyor belt (not shown).

Reference number 25 denotes an imaging means for imaging a surface of the moving film 22 processed by said rolls 1-5, which outputs a surface image 26 of the film 22. The region of the surface of the film 22 imaged with this imaging means 25 is indicated in Fig. 1 with line 23. In the depicted case, the imaging means 25 is arranged such that the imaged region covers the whole working width of roll 5 before the film is removed from roll 5 by means of the removal means 23. In other words, this region of the film surface has at least the length L and a predetermined width i.

Reference number 27 denotes an image processing means for processing the image 26 generated by the imaging means 25. In the embodiment shown in Fig. 1, the image processing means is arranged to judge a surface condition of said film 22 on the basis of said surface image 26. This judgment leads to the generation of a control signal 28, which is applied to adjusting means 29 which, in turn, adjust operational parameters of the refiner 19 on the basis of said judging signal 28.

Preferably the imaging means 25 will be an electronic camera, such as a CCD-camera, the image processing means will be a computer equipped with suitable software, and the adjusting means will comprise suitable electric devices that respond to the control signal 28, such as e.g. electric motors for adjusting pressure valves or for adjusting the cooling water flow.

The operational parameters controlled by said adjusting means 29 comprise the temperatures of one or more of said plurality of rolls 1-5 and the pressure with which corresponding ones of said plurality of rolls are pressed against each other.

For controlling the temperatures of respective ones of said plurality of rolls 1-5, the amount of cooling water and/or the temperature of the cooling water supplied into the inner portion of the respective one of said rolls 1-5, as described with reference to Fig. 11b, is controlled.

For adjusting the pressure with which respective ones of said rolls 1-5 are pressed against each other, said adjusting means 29 are e.g. connected to such manipulating means 8a, 8b, 8c and 8d as described with reference to Fig. 11a, and operate in co-operation therewith. These adjusting 29 means can be realized as an electric motor provided with a microcontroller for driving the electric motor in accordance with the control signal 28. The electric motors may be arranged such that they vary the state of the manipulating means 8a to 8e. If the first and second actuating means 6a, 6b, 7a, 7b are hydraulically actuated hydraulic rams, the manipulating means 8a to 8d are valves and said electric motor changes or varies the opening degree of said valves.

In the following, the basic process of the milling means shown in Fig. 1 will be described with reference to Fig 2.

The conveyor belt 20 supplies the material to be processed to the material receiver 21, which supplies it to the first roll 1. The refining process of the material is then carried out as described with reference to Fig. 12. As shown in step S1 of Fig. 2, the imaging means 25 images a region or an area on the surface of the processed film.

As shown in step S2 of Fig. 2, the imaging means 25 generates a surface image 26. Steps S1 and S2 in the imaging means 25 are carried out by scanning the surface region 24 of the film 22 on roll 5 with an optical system during operation of the refiner 19 and digitizing the taken image. The image taken by said imaging means may be associated with any suitable type of radiation, but the imaging means 25 will preferably be sensitive in the visible and/or infrared light range of the electromagnetic spectrum. Sensitivity in the infrared spectrum is especially advantageous, because the temperature distribution along the roll contains valuable information on the condition of the roll and the mass being processed. Such information could previously not be evaluated by human operators, as the human eye is not sensitive in this range. Also, with the present invention it is possible to simultaneously produce images taken in two or more separate regions of the spectrum, to thereby obtain and evaluate data carrying different types of information.

The digitized surface image 26 is then output to the processing means 27.

As indicated in step S3 of the flowchart shown in Fig. 2, the image processing means 27 then judges a surface condition of the imaged film 22 on the basis of the supplied surface image 26. Then, in step S4, the processing means 27 generates a control signal which indicates the surface condition of said moving film 22. This surface condition relates e.g. to whether said film covers the whole machining width of roll 5, or whether there are e.g. holes or gaps in the film 22.

Then, as shown in step S5 of Fig. 2, the adjusting means 29 adjust the operation parameters such as the temperature of respective ones of said rolls 1-5 and/or the pressure with which respective ones of the rolls, e.g. the rolls 4 and 5, are pressed against each other, on the basis of the control signal 28. The temperature of respective ones of said rolls 1-5 can be adjusted by setting the volume of cooling water supplied to the inner portions of said rolls, as already described with reference to Fig. 11b.

Steps S1 to S5 can be repeated with a suitable repetition frequency or can be carried out continuously.

The imaging means 25 can be arranged such that it takes a predetermined number of line images corresponding to successive regions of said film 22, each of said regions covering the whole machining width L of roll 5 and a predetermined length of said film. A predetermined number of said line images are then put together in time order to form a line imaging showing a predetermined film length over the whole machining width L of roll 5. In a variant, the film surface imaging means 25 can be arranged such that it images a region having e.g. a square form which is of particular interest for the quality of the film such as a side portion thereof.

The present invention allows to reduce the production costs of e.g. chocolate significantly since no operator is necessary to monitor the refiner which allows that the machine run time is prolonged. Also, the present invention allows to monitor and adjust the coverage on the roll, which the automatic machines of the prior art are not capable of. Thereby, the output quality (mean particle size and mean deviation of particle size) can be improved with respect to prioe art devices. Furthermore, since the present invention allows to detect problems such as a worn roll in the refiner at an initial state by continuously motoring the film surface, the machine down time can be reduced.

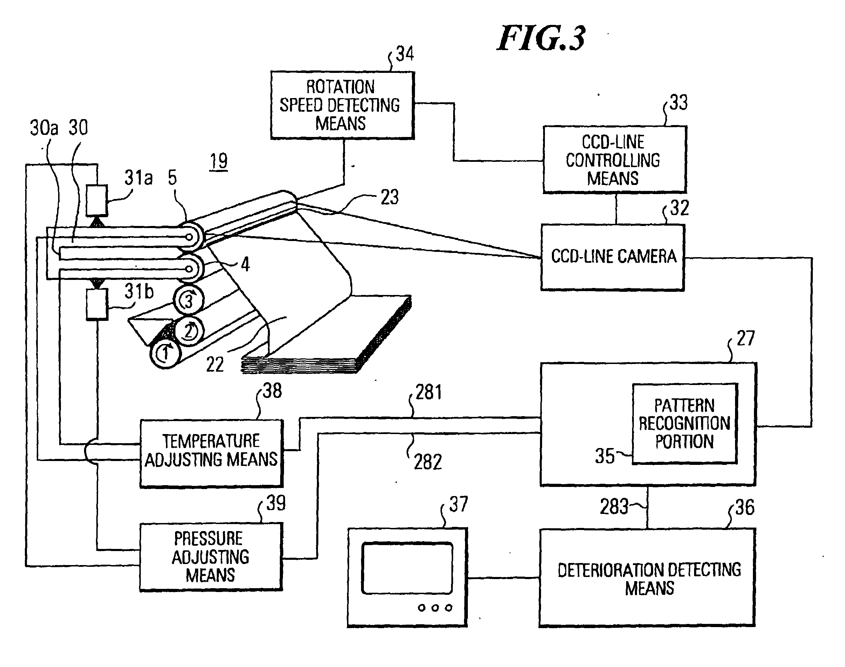

Fig. 3 shows a second embodiment of the milling means according to the present invention. The arrangement of the refiner 19 shown in Fig. 3 is similar to the arrangement described with reference to the first embodiment of the milling device, except that a holding portion 30 is shown for holding the fourth and the fifth roll 4 and 5 of the refiner 19. This holding portion is provided for supporting the axes rolls 4 and 5. A similar holding portion can be provided for each pair of rolls 1-5. The holding portion 30 is formed as a U and the strength of the portion 30a of the holding portion 30 is such that a pressure with which the roll 5 and the roll 4 are pressed against each other can be changed by actuating pressure actuators 31a and 31b. Said pressure actuators 31a and 31b can e.g. be pneumatic or electric actuators.

In the embodiment of Fig. 3, the imaging means is an electrical line-scan camera, such as the depicted CCD-line camera 32. The CCD-line camera 32 is arranged such that it takes a line image of the surface of the film 22, which corresponds to a region of the surface of the film 22 having a predetermined width and a length equal or more than the machining width of roll 5. It may be noted that either radiation emitted by the region being imaged is recorded and/or reflected radiation. A suitable illumination means (not shown) may be employed. The CCD-line camera is constituted by a CCD-line arranged in parallel to the rotation axis of the roll 5, or parallel to the rotation axis of another suitable one of said rolls 1-4. However, the imaging is preferably done with respect to the last roll, because this provides the best information on the whole process. The line image which is read out from the CCD-line in said CCD-line camera 32 comprises a number of pixels. The number of these pixels corresponds to the resolution of the CCD-line. Each of said pixels images a corresponding area on the film surface. That is, if e.g. a CCD-line having a resolution of 1800 pixels is used and this CCD-line is provided with a suitable lens system (not shown) to image an area of said film 22, which has a length corresponding to the machining width of roll 5, that is e.g. 1800 mm, and a width of 1 mm, each of said pixels corresponds to an area of said film surface of said film 22 having a width and a length of 1 mm.

Each of said pixels has a pixel value which corresponds to physical characteristics of the respective area element having a width of e.g. 1 millimeter and a length of 1 millimeter in the above example. The number of possible pixel values and their type may be selected according to the specific requirements and desires of a given specific situation. For example, in the simplest case, the pixels will have two values (black or white), but it is equally possible to provide more possible values, such as a suitable number of gray shades or colors for representation on a CRT. It should be remarked that each of said pixel values corresponds to a given physical property, depending on the type of radiation used for imaging. For example, when using electromagnetic radiation in the visible spectrum, the value of a pixel will correspond to a visible property (as presented to the human eye) of the film, such as actual color or gray shade. If IR radiation is used, the pixel values will however correspond to a heat profile, such that a representation on a CRT will be in so-called false colors or false shades.

A CCD line is a charge coupled device and the line image which is read out is a row of voltage or current intensities. Each one of these intensities indicates the optical characteristics of the respective area scanned with this pixel. These intensities are referred to as pixel values and depend on the type of CCD. The optical characteristics may e.g. be the color of this respective area or the heat profile, as discussed above.

Reference number 33 denotes a CCD-line controlling means which is connected to the CCD-line camera 32 and to a rotation detecting means 34 for monitoring the rotation of the roll 5.

The rotation detecting means 34 is e.g. constituted by an optical detecting means, such as a laser diode in combination with an optical receiver, which detects areas on the side of the roll 5 having different reflecting properties, like a beam chopper. The rotation detecting means determines a recurring start point in this way, such that the position of the roll is known.

These rotation speed detecting means 34 provide a signal to the CCD-line controlling means 33 indicative of the rotation speed of the roll 5. The CCD-line controlling means is adapted to generate an output signal which is applied to the CCD-line camera 32, which controls an image taking frequency of the CCD-line in said CCD-line camera 32 such that the surface of the film 22 is continuously imaged. This is done on the basis of the rotation speed of roll 5. preferably, the scanning frequency is simply a sufficiently large multiple of the rotation speed.

If e.g. the arrangement of Fig. 1 is assumed, wherein roll 5 has a diameter of 40 centimeters, a moving speed of said film 22 removed from said roll 5 is approximately 1257 millimeters per revolution. Accordingly, the CCD-line controlling means 33 controls said CCD-line in said CCD-line camera 32 such that it takes 1257 line images per revolution. Therewith it is ensured that successive line images correspond to successive areas on said film without having a gap in between, such that the whole surface of the film 22 is imaged or scanned.

The line image is provided to the image processing means 27 comprising a pattern recognition portion 35.

This pattern recognition portion 35 is adapted to recognize at least one predetermined pattern in the line image of the film surface. It has to be noted that the line image may comprise not only one line but also a plurality of successively taken line images which where buffered in buffer means (not shown) and then provided to said image processing means 27.

The image processing means 27 then performs a judgment on the basis of the recognized pattern. In response to the judgment corresponding control signals 281, 282, and 283 are output. The signal 283 is output to a deterioration detecting means 36 which is in turn connected to a display unit 37, which can e.g. be an LCD-display or a single LCD. The deterioration detecting means 36 is adapted to activate said display means 37 on the basis of the control signal 283.

Control signals 281 and 282 are output to temperature adjusting means 38 and to pressure adjusting means 39. Said pressure adjusting means 39 are adapted to control and/or actuate said pressure actuators 31a and 31b on the basis of the control signal.

The temperature adjusting means 38 can be realized by valves respectively arranged at the axis of the rolls 5 and 4, which control the flow of cooling water into the rolls 5 and 4.

The temperature adjusting means 38 can also be realized by using heating or cooling means for controlling the temperature of the cooling water supplied to the internal portion of said rolls 4 and 5, either alone, or in combination with the above mentioned valves for supplying cooling water.

When imaging on the basis of IR radiation, it is preferable to use a cooling system for the roll that allows to adjust the temperature of certain parts of the roll. More specifically, a roll can be used that has a plurality of cooling water supply lines, where each line leads to a different section of the roll, and each line has its own control valve. Thereby, when the temperature profile indicated by the IR image shows that one portion requires more cooling and another less, then the flow of cooling water can be appropriately controlled. In this way, the invention not only enables the providing of even coverage on the rolls, but also of even temperature distribution. This again leads to a better output quality.

In the following, the operation of the milling device according to the second embodiment of the present invention will be described.

In operation, the material to be processed is supplied to roll 1 of the roll mill or refiner 19 (a conveyor belt 20 as shown in Fig. 1 has been omitted for the sake of clarity of the figure). Then, the refining process is performed, as described with reference to Fig. 12, such that there is the pasty film 22 containing individual particles with the desired size, on roll 5. Then, the film 22 is removed from roll 5 by the removal means 23. The rotation detecting means 34 detects areas of different reflection characteristics on the side of the roll 5 and consequently detects the rotation position of the roll 5 and outputs a signal to the CDD-line controlling means 33 indicating the position of the roll 5. The CCD-line controlling means 33 then outputs a controlling signal to said CCD-line camera 32 for controlling the scanning frequency of the CCD-line arranged in said CDD-line camera 32.

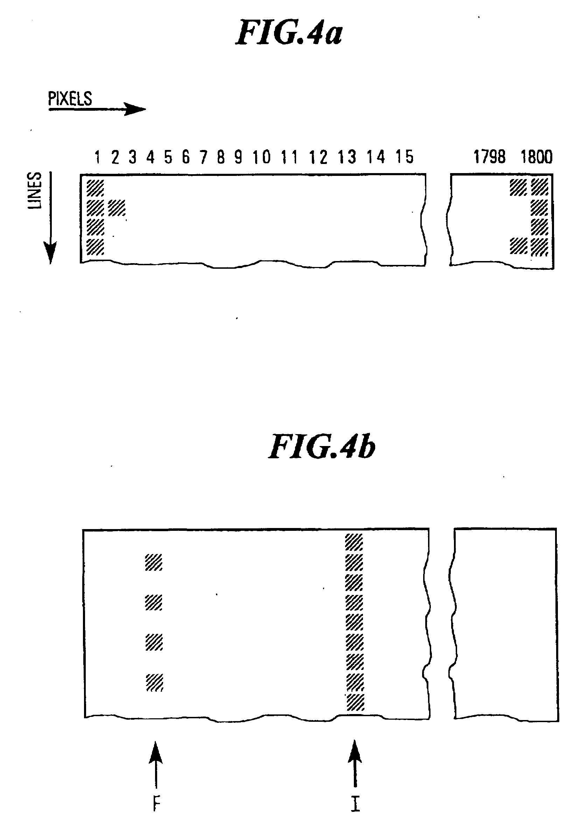

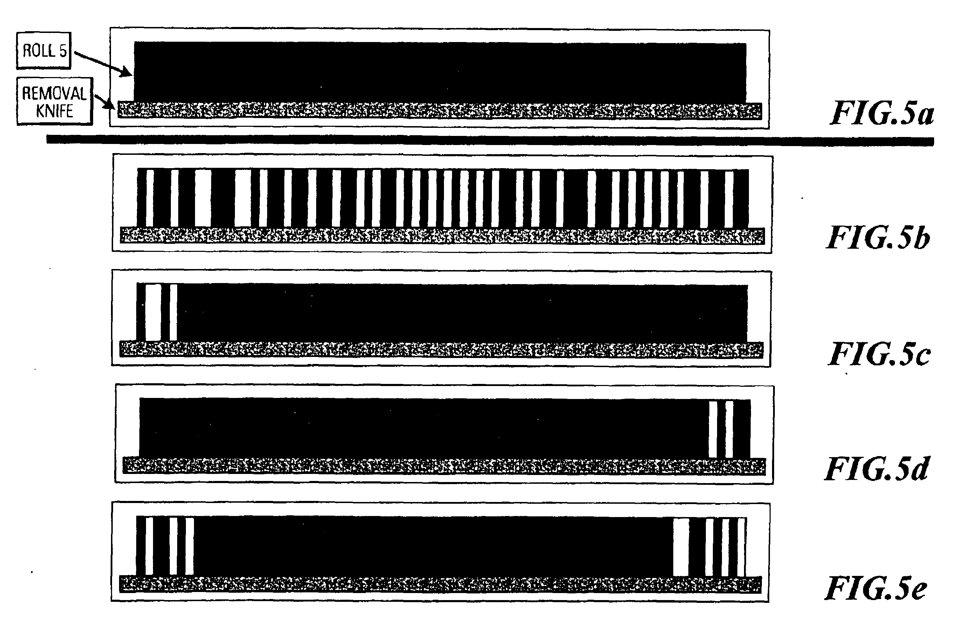

Examples of patterns will be discussed in connection with Figures 4 and 5.

Fig. 4a and 4b show schematic representations of surface images of the film 22 consisting of successively taken line images which are ordered one after the other in time order, each having 1800 pixels. The horizontally arranged numbers correspond to the pixel numbers.

A white pixel, such as the ones in the middle of the image in Fig. 4a, is assumed to correspond to an error-free film surface at the area corresponding to this pixel, whereas a gray pixel indicates an error in the film surface, such as a hole, or a plurality of individual particles which are bunched together. A plurality of different errors such as holes, particles bunched together, areas with particles having a wrong particle size or areas with dirty particles can be identified due to their different optical characteristics.

Preferably the present invention is used to determine the coverage of material on the roll, such that a white pixel in the Figure corresponds to material on the roll and a gray pixel to a lack of coverage. These two states are typically easy to identify and distinguish in image processing, because the covered area will typically be dull and dark, whereas the uncovered area will show the metal of the roll, i.e. a light and reflective surface.

It has been found that particular patterns in such a surface image are indicative of the machining state and operational parameters of the refiner.

For example the pattern shown in Fig. 4a, in which there is a lack of coverage at the ends, indicates a machining state wherein the temperature of rolls 4 and 5 is too high and/or the pressure with which rolls 4 and 5 are pressed against each other is too high.

The pattern indicated with reference character F in Fig. 4b shows holes on the surface of the film 22 having a certain distance from each other, which indicates that a portion of one of the rolls 4 or 5 is out-of-center. This is a sign that the respective roll is worn out and has to be changed.

Reference character I indicates an error pattern indicative of rolls which do not have the right temperature, i.e. which are too cold or too warm.

As a consequence, the identification of certain patterns, be it along a horizontal line, a vertical line or two-dimensionally, can be used as information for generating appropriate control signals.

Figs. 5a to 5e show representations of the final roll 5 of a five-roll refiner and the removal knife. In the Figures black indicates coverage and white indicates the metal of the roll. Fig. 5a shows an ideal film wherein the operational parameters of the refiner are correctly adjusted. The result is full coverage. Fig. 5b shows a machining state of the refiner wherein the rolls are too cold, which leads to the striped pattern over the entire length of the roll. These stripes correspond to the gray pixels shown in Fig. 4a and 4b, which were referred to as an error in the film surface. Figs. 5c and 5d show the surface of the film 22 when the rolls are overpressed. These patterns show error portions at the sides of the roll, where the roll in Fig. 5c is overpressed on the left side, and the roll in Fig. 5d on the right side. The error pattern shown in 5e is indicative for a worn removal knife and is characterized by a combination of stripes and error portions at the side of the roll.

It may be noted that although the image of the surface on the roll is taken before the mass is removed from the roll by the removal knife, a worn removal knife will lead to an incomplete removal, i.e. material will remain on the roll, which in turn leads to characteristic patterns.

The line image taken with the CDD-line camera 32 is input to the image processing means 27 comprising the pattern recognition portion 35. The pattern recognition portion 35 recognizes or identifies respective patterns, described with reference to Figs. 4 and 5a to 5e, and the control signals 281, 282, 283 are output on the basis of said recognized pattern.

In case the judging signal indicates the pattern shown in Fig. 5e, said deterioration detecting means 36 outputs a warning signal to the display means 37, such that the display means 37 indicates a deterioration of the removal knife.

Said deterioration detecting means can further be adapted to output a signal to said display means 37, if the pattern indicated with reference character F in Fig. 4 is recognized by said pattern recognition portion 35, such that the display means 37 indicates a deterioration of the roll 5 to the operator or indicates to the operator that the roll 5 has to be changed. In case a pattern as those described with reference to Figs. 5c and 5d is recognized in the pattern recognition portion 35, the image processing means 27 outputs a corresponding control signal to the pressure adjusting means 39 such that the pressure adjusting means 39 changes the pressure with which the rolls 4 and 5 are pressed against each other by a predetermined amount.

In case the pattern recognition portion 35 recognizes a pattern similar to the one described with reference to Fig. 5b, and the image processing means 27 outputs a signal to the temperature adjusting means 38 in correspondence with the recognized pattern, this temperature adjusting means 38 changes the amount of cooling water supplied to rolls 3 and/or 4 and/or 5 and/or the temperature of the cooling water by a predetermined amount.

The above-described operation allows to automatically set the operational parameters of the refiner 19 without the intervention of an operator. In addition to that, it is possible to service the machine before major problems occur since even slightest indications of wear can be recognized and indicated to an operator.

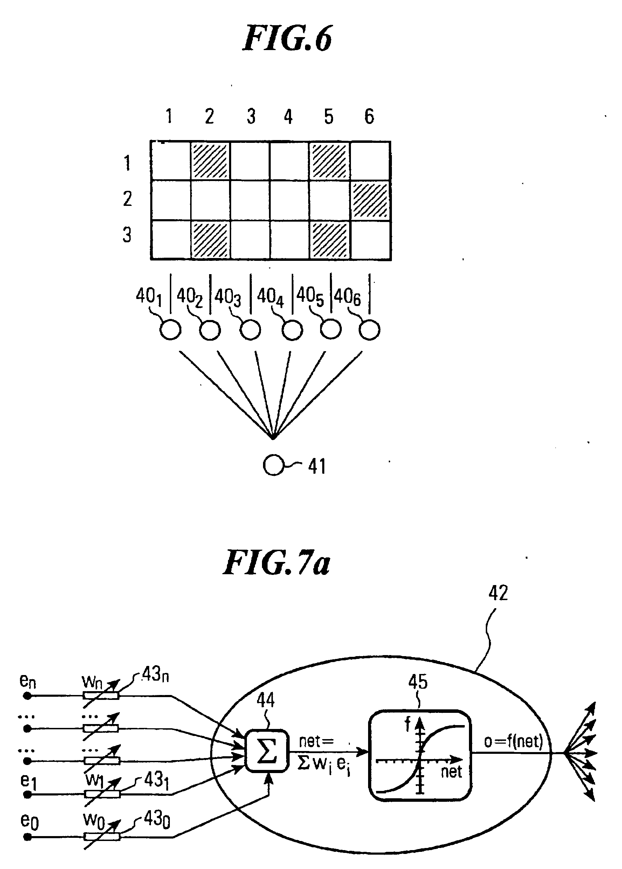

In the following, an embodiment of the pattern recognition portion 35 described with reference to Fig. 3 will be described in more detail with reference to Fig. 6. Said pattern recognition portion 35 can be adapted to arrange a predetermined number of line images recorded at successive times in a successive order to form a surface image and to recognize a plurality of patterns in said surface image. However, it has to be noted that the pattern recognition portion 35 can also be adapted to recognize the portion by analyzing only one line image at a time.

In general, it is possible that the pattern recognition in the image processing means 27 is conducted in any suitable way. For example, it is possible to adopt a statistical method, in which specific patterns are stored, the scanned images are compared to said stored patterns and a similarity value is calculated for each comparison, such that the stored pattern having the greatest similarity is identified as the scanned pattern.

It is however preferable to use a pattern recognition method employing neural networks, because this allows a much faster image processing than the above mentioned statistical method. The pattern recognition portion 35 shown schematically in Fig.6 therefore comprises a neural network comprising a plurality of neurons. This neural network architecture can be implemented with a software program in a suitable processor. Reference numbers 40₁ to 40₆ denote a first layer of neurons which are connected to a second layer neuron 41. These neurons 40₁ to 40₆ and 41 are trained by inputting a line image or a surface image consisting of a predetermined number of line images as an input. As shown in Fig. 6 a surface image consisting of three lines respectively consisting of six pixels is inputted into the neural network comprising neurons 40₁ to 40₆ and 41. In particular, pixel 1 of lines 1 to 3 is input to the neuron 40₁, pixel 2 of lines 1 to 3 is input to the neuron 40₂, pixel 3 of lines 1 to 3 is input to neuron 40₃, pixel 4 of lines 1 to 3 is input to neuron 40₄, pixel 5 of lines 1 to 3 is input to neuron 40₅ and pixel 6 of lines 1 to 3 is input to neuron 40₆.

Then, the output signal of the neurons 40₁ to 40₆ is input to the second level neuron 41, which in turn outputs a result signal. A neural network trained with the surface image shown in Fig. 6 always outputs the result signal, if a surface having a similar pattern as the training image is input. In other words, if - after the training - the same surface image as the one shown in Fig. 6 is input to the neurons 40₁ to 40₆, the second level neuron 41 outputs the result signal. If any other surface image is input to the neural network shown in Fig. 6, the second level neuron 41 does not output the result signal.

Specifically, the training will consist in setting specific operational parameters (e.g. temperature too high) or employing a part (a roll or removal knife) in a certain condition (e.g. worn to a specific degree), using the resulting pattern as a training input, and setting the appropriate control signal for said specific operational parameters or parts as a result signal associated with the corresponding pattern.

In the following, the training of the neurons will be described in more detail with reference to Fig. 7a showing a model of a neuron. This model of a neuron can be found in an Internet publication of Martin Müller at http:\\zsw.e-technik.uni-stuttgart.de (9.10.1998).

Fig. 7a shows a model of a neuron 42. Incoming signals e₁ to eₙ are respectively multiplied with a weight W₁ to Wₙ by means of multipliers 43₁ to 43ₙ. A further input +1, which is also multiplied with a weight W₀ by means of a multiplier 43₀ is a connection to a so-called on-neuron which constantly outputs a value plus 1 and which serves for compensating an offset of the neuron 42. The weight W₀ can therefore also be called "activating threshold" or "threshold" of the neuron 42. The input signals e₁ to eₙ are added by means of an adder 44 comprised in the neuron 42, and are then input as input net to a non-linear transfer function or activation function f, indicated with reference number 45. The selection of the transfer function significantly determines the behavior of the whole network. As the transfer function 45, any kind of linear or non-linear function, sinusoidal function or simple threshold function can be used. However, preferably the hyperbolic tangent is used. Then, the output o is output to the following cell.

The training of the neuron consists of finding an optimum set of weights w₀ to wₙ for the input signals e₁ to eₙ and +1 such that a desired output o is output. That is, the weights W₀ to wₙ have to be set such that a desired output o is output if a particular input factor e₁ to eₙ is input to the neuron. In all other cases, the output o has to be different from the desired outputs.

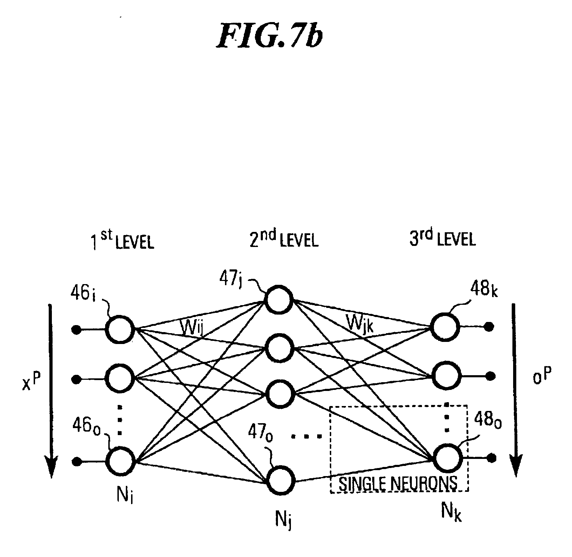

Fig. 7b shows a second example of a neural network which can be used in the pattern recognition portion 35. Such a neural network is described in an Internet publication of Martin Müller at http:\\zsw.e-technik.uni-stuttgart.de (9.10.1998). The depicted architecture of this neural network according to the second example is realized by connecting a plurality of neurons in a particular way. This neural network architecture can be implemented with a software program in a suitable processor.

The network architecture shown in Fig. 7b comprises a first level with Nᵢ single neurons 46₀ to 46ᵢ, a second level with Nⱼ neurons 47₀ to 47ⱼ and a third level with Nₖ neurons 48₀ to 48ₖ. If the case is assumed that the surface image described with reference to Fig. 4 is input to this neural network, the input x_{T} would be a 22x17 matrix. In other words, if this image would be input to a neural network having 17 first level neurons, the input vector input to each of these neurons would be 22-dimensional.

As shown in Fig. 7b, each first level neuron 46₀ to 46ᵢ is connected to each of the second level neurons 47₀ to 47ⱼ. Each of the second level neurons 47₀ to 47ⱼ is in turn connected to each of said third level neurons 48₀ to 48ₖ. As indicated with Wᵢⱼ and Wⱼₖ, each input of the respective neuron is weighted with a corresponding weight which is determined during the training of the network. The output of each of the third level neurons 40₀ to 40ₐ forms the output factor or matrix op.

It has to be noted that it is also possible to only input every second or third pixel of the surface image as input to the neural network to decrease the amount of data. Preferably, the surface image is sliced into a predetermined number of equal increments along the width of the roll E and then input into the corresponding number of neurons.

If this neural network is trained, i.e. the weights Wᵢⱼ and Wⱼₖ are correspondingly set such that it recognizes e.g. the patterns described with reference to Figs. 4 and 5a - 5e, the output factor o_{P} will indicate if a surface image with one of these patterns is input as input vector or matrix x^{P}. (It has to be noted that for the sake of clarity only Wᵢⱼ and Wⱼₖ are depicted. However, each of the connection lines shown between the neurons comprises weighting means such as a multiplier) Therefore, the neural network is able to recognize respective patterns.

The training of the neural network can be carried out in accordance with a plurality of learn or training algorithms such as the back propagation algorithm.

The use of a neural network allows it advantageously to simply process a plurality of data at a high speed once the network is trained.

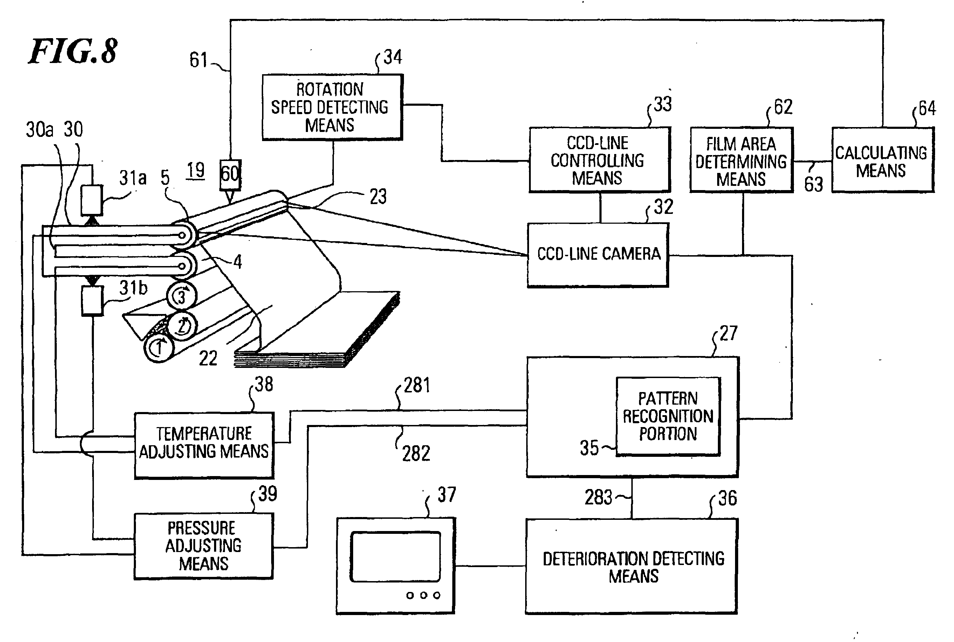

Fig. 8a shows a third embodiment of the milling means according to the present invention. This embodiment corresponds to the second embodiment, except that a film thickness detecting means 60, a film area determining means 63 and a calculating means 64 are additionally provided. The film area determining means 62 receives the line image output by the CCD-line camera 32 as the input signal. A film area is determined by counting the pixels corresponding to areas of the film without holes and/or other errors in the line image. In other words, pixels depicting a hole in the film surface are not counted.

Accordingly, it is possible to exactly detect the film area of the processed film without including holes and/or error portions of this film. The film area determining means can be adapted to continuously sum up the film area in the continuously taken line images to finally output a total processed film area, if the operation of the refiner 19 stops.

However, the film area determining means 62 can also be adapted to output the film area of a predetermined length of the processed film, i.e. after a predetermined number of line images.

It may be noted that although Fig. 8 shows the means 62 and 64 as separate entities, this is done for reasons of clarity, and in practical applications, the means 62 and 64 will be incorporated in the image processing means 27, e.g. as software implementations.

Due to the fact that - as already described above with reference to Fig. 3 - each pixel in the line image corresponds to a set surface area of the imaged surface, the determination of the film area can be simply done by counting the number of pixels and multiplying it with the surface area imaged with each pixel.

The film area determining means 62 outputs an area signal 63 representing the area of the film to the calculating means 64. The calculating means 64 receive a second input signal 61 from a film thickness detecting means 60 associated with the fifth roll 5. This second signal 61 is a thickness signal indicating or reflecting a thickness of the film 22.

The calculating means 64 calculate a volume of the processed film or the film processed during a certain time on the basis of the thickness signal 61 and the surface signal 63.

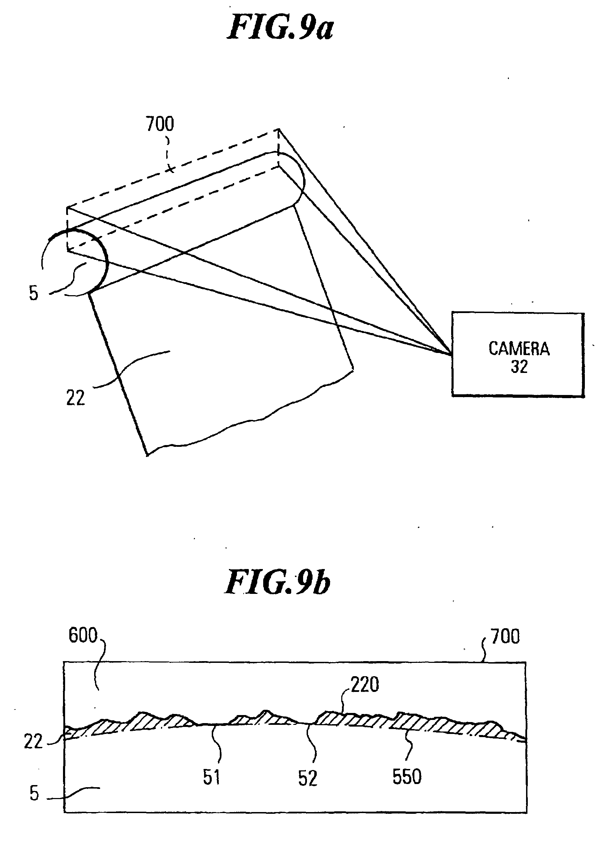

The film thickness detecting means 60 can e.g. be of the type described in WO 94/10530. However, preferably the film thickness detecting means 60 are also integrated in the image processing means (27), such that an arrangement shown in Fig. 3 in fact contains both the film area determining means and the film thickness determining means. This shall be explained in the following with reference to Fig. 9a and 9b.

In order to be able to determine the film thickness covering roll 5, the viewing scope of imaging means 32 must be arranged such that the resulting image contains an area 700 comprising the edge 220 of the mass 22 covering roll 5 with respect to the background 600, and the edge 550 of roll 5 itself. This is shown in Fig. 9b, which shows roll 5, the dash-dotted edge 550, which is generally curve shaped due to the camber, the material 22 being processed, the edge 220 of material 22 and the background 600. The difference between the edges 220 and 550 is shown as a hatched surface. The thickness signal 61 is generated on the basis of a comparison of said two edges 220 and 550. The image in Fig. 9b covers the entire operation width of the roll (e.g. W in Fig. 11b).

The identification of edges 220 and 550 can be accomplished in any suitable or desirable way.

Edge 220, which marks the border between the mass 22 and the background 600, can e.g. be identified by choosing an appropriate background such that the image 700 will reproduce regions 600 and 22 differently. For example, when imaging in the visible range, the color or shade of the background should be well distinguishable from the color or shade of the mass and the roll. When performing IR imaging, the temperature of the background should be sufficiently different from that of the mass 22 and roll 5.

Regarding the determination of edge 550, it must be considered that this edge is generally covered by the mass 22. One way of determining edge 550 in a given image 700 consists in carrying out a trial run without mass and recording edge 550 for later use, such that when analyzing an image, the image processing means will determine edge 220 directly from the image and then compare it to stored edge 550. An alternative method of determining edge 550 consists in taking advantage of the fact that in general there will always be varying sections on the roll which are not covered by mass 22, e.g. the points 51 and 52 shown in Fig. 9b. The image processing means will then be arranged to identify said points that are not covered (e.g. on the basis of characteristic patterns on the lower section of image 700, or from the temperature difference between the covered and uncovered roll) and record them as sections of edge 550, to thereby piece together edge 550 over time. This process may involve interpolation and extrapolation. Preferably the two ways are combined, by starting with an initial stored edge 550, which is then modified over time by the identification of uncovered sections 51, 52, if these uncovered sections indicate that the actual edge is no longer congruent with the stored edge. Again interpolation and extrapolation may be employed.

The above mentioned thickness signal is generated on the basis of a comparison between edges 220 and 550. As indicated in Fig. 9b, the thickness of layer 22 will generally not be constant, but much rather a value that varies along the length of the roll and over time. Various possibilities exist for deriving a value indicative of the film thickness. Preferably, the image processing means will determine the area between the two edges (hatched in Fig. 9b) and calculate a value indicative of the thickness on the basis of said area, for example by dividing by the imaged roll length in order to generate an average thickness value.

Camera 32 can be arranged in any suitable way such that it automatically produces an image covering area 700, e.g. when using a line-scan camera, the scanning frequency must be so high that the number of lines corresponding to area 700 can be scanned quickly compared to the rotation frequency of roll 5.

By determining both control signals for the roll mill and suitable warning devices (e.g. the deterioration detecting means in Fig. 8) and at the same time being able to derive an indication of throughput, all with a single imaging means, the present invention achieves a very flexible and efficient milling device.

According to a further preferred embodiment, which may be combined with all of the above embodiments, the imaging means and image processing means are arranged in such a way that another method of monitoring the roll mill may be performed. In this method, the roll mill is run without material, i.e. the rolls turn but no material is supplied and transported. In this case no pressure is applied to the rolls. Then the image generated by the imaging means is processed in the processing means in such a way that the surface of the rotating roll is analyzed. In this way it is possible to automatically obtain information on the surface of a roll and information on the dynamic state of said roll in one measurement, without having to dismount the roll from the roll mill.

As will be understood, this supplementary aspect makes a milling device of the present invention even more flexible and efficient.

Although the present application has been described with reference to specific embodiments, it has to be noted that the embodiments and examples given above are for illustrative purposes only and for a better understanding of the present invention and by no means intended to limit the scope of the present invention. Other modifications are clearly possible for a person of ordinary skill in the art without departing from the scope of the present invention, as defined in the following claims.

Reference signs are intended for a better understanding and shall not limit the scope.

## Claims

1. A milling device, comprising
a roll mill (19) having a plurality of rolls (1, 2, 3, 4, 5) for milling a mass (22),
surface imaging means (25, 32) for imaging a surface on at least one of said rolls (1, 2, 3, 4, 5) and for generating a corresponding surface image (26),
image processing means (27) for processing said surface image (26).

2. A milling device according to claim 1, characterized in that said mass is a premixed suspension.

3. A milling device according to claim 2, characterized in that said premixed suspension comprises at least one of sugar, cocoa liquor, fat and milk powder.

4. A milling device according to one of claims 1 to 3, characterized in that said surface image processing means (27) is arranged to generate a control signal (28) on the basis of said surface image (26), and to provide said control signal to adjusting means (29, 38, 39, 31a, 31b, 6a, 6b, 7a, 7b) for adjusting operational parameters of said roll mill (19).

5. A milling device according to claim 4, characterized in that said operational parameters comprise at least one of the temperatures of one or more of said plurality of rolls (1, 2, 3, 4, 5), and
the pressure values with which corresponding ones of said plurality of rolls (1, 2, 3, 4, 5) are pressed against one another.

6. A milling device according to one of claims 1 to 5, characterized in that said surface imaging means (25, 32) is a line scan camera (32) and said surface image (26) consists of a plurality of pixels arranged in one or more lines, each of said plurality of pixels representing an area of the surface being imaged and having a pixel value corresponding to physical characteristics of said area.

7. A milling device according to claim 6, characterized by said line scan camera (32) being arranged to image the surface on one roll (5) of said roll mill (19), and a camera controlling means (33) being provided that is arranged to control the line scanning frequency of said line scan camera (32) on the basis of the rotation speed of said one roll (5).

8. A milling device according to claim 7, characterized in that said line scan camera (32) is arranged such that the direction of the line scan is parallel to the rotation axis of said one roll (5).

9. A milling device according to claim 8, characterized in that said line scan camera (32) is arranged such that the line scan length is substantially equal to the machining width (L) of said one roll (5).

10. A milling device according to claim 4 or a claim dependent on claim 4, characterized in that said surface image processing means (27) is arranged to perform a pattern recognition on said surface image (26) and to generate said control signal (28) on the basis of the result of said pattern recognition.

11. A milling device according to claim 10, characterized by said surface image processing means (27) being arranged to compare said surface image (26) with stored images and to determine said control signal (28) on the basis of the stored image having the greatest similarity with said surface image.

12. A milling device according to claim 10, characterized in that said surface image processing means (27) comprises a neural network comprising a plurality of neurons (40₁ to 40₆, 42, 46₀ to 46ᵢ, 47₀ to 47ⱼ, 48₀ to 48ₖ).

13. A milling device according to claim 12, characterized in that the network architecture of said neural network comprises at least two levels and the neurons (40₁ to 40₆, 42, 46₀ to 46ᵢ, 47₀ to 47ⱼ, 48₀ to 48ₖ) of said at least two levels are connected to each other according to a predetermined connection scheme.

14. A milling device according to one of claims 1 to 13, characterized in that
a removal means (23) is provided for removing said mass from the last (5) of said plurality of rolls (1, 2, 3, 4, 5),
said surface imaging means (25, 32) is arranged to image a surface on said last roll (5),
an indication means (37) is provided for indicating a deterioration of said removal means (23) and/or of one of said plurality of rolls (1, 2, 3, 4, 5); and
said surface image processing means (27) is arranged to generate a control signal for said indication means (37) on the basis of said surface image (26).

15. A milling device according to one of claims 1 to 14, characterized by
said surface imaging means (25, 32) being arranged to image a surface on one of said rolls (5),
thickness detecting means (60) for generating a thickness signal (61) associated with the thickness of said mass (22) on said one roll (5),
area determining means (62) for determining an area of coverage of said mass (22) on said one roll (5) on the basis of said surface image (26), and generating an area signal (63) associated with the area of coverage of said mass (22) on said one roll (5), and
volume calculating means (64) for calculating a volume of said mass (22) on the basis of said thickness signal (61) and said area signal (63).

16. A milling device according to claim 15, characterized in that
said surface imaging means (25, 32) are arranged to produce an image comprising the edge of the mass covering said one roll (5) with respect to the background, and the edge said roll (5) itself,
said thickness detecting means (60) is a part of said surface image processing means (27), where said thickness detecting means (60) is arranged to determine said edge of said mass and said edge of said one roll (5) in said image (26) and to generate said thickness signal (61) on the basis of a comparison of said two edges.

17. A milling device according to one of claims 1 to 16, characterized by said surface imaging means (25, 32) being sensitive in the infrared range.

18. A milling device according to one of claims 1 to 17, characterized by said image processing means (27) comprising a roll analyzing means for analyzing the state of at least one of said rolls (1, 2, 3, 4, 5) on the basis of the surface image (26) generated by said surface imaging means (25, 32) and for generating a roll state signal.

19. Method for controlling operational parameters of a roll mill (19) having a plurality of rolls (1, 2, 3, 4, 5) for milling a mass (22), comprising the following steps:
- generating (S2) an image (26) of a surface on one (5) of said rolls (1, 2, 3, 4, 5),
- judging (S3) a surface condition of the surface being imaged on the basis of said surface image (26),
- generating (S4) a control signal (28) on the basis of the judgment of the surface condition, and
- adjusting (S5) operational parameters on the basis of said control signal (28).

20. Method according to claim 19 characterized in that said judging step (S3) comprises a pattern recognition step.

21. Method according to claim 19 or 20, characterized by:
- generating a thickness signal (61) associated with the thickness of said mass (22) on said one roll (5),
- determining a coverage area of said mass (22) on said one roll (5) on the basis of said surface image (26);
- generating an area signal (63) associated said coverage area of said mass (22) on said one roll (5); and
- calculating a volume of said mass (22) on the basis of said thickness signal (61) and said area signal (63).

22. Method according to claim 21, characterized by
- producing an image (26) comprising the edge of the mass covering said one roll (5) with respect to the background, and the edge said roll (5) itself, and
- determining said edge of said mass and said edge of said one roll (5) in said image (26) and generating said thickness signal (61) on the basis of a comparison of said two edges.

23. Method for analyzing the state of a roll (5) in a roll mill (19) having a plurality of rolls (1, 2, 3, 4, 5) for milling a mass (22), comprising the following steps:
- letting said roll (5) run without any mass (22) being transported over said roll (5) and without said roll (5) being pressed against another roll,
- generating an image (26) of the surface of said roll (5),
- analyzing said image (26) and generating a roll state signal on the basis of said analysis.
